(19) Europäisches Patentamt
European Patent Office
Office européen des brevets

(11) **EP 3 476 034 B1**

(12) **FASCICULE DE BREVET EUROPEEN**

(45) Date de publication et mention de la délivrance du brevet:
**03.04.2024 Bulletin 2024/14**

(21) Numéro de dépôt: **17729896.5**

(22) Date de dépôt: **16.06.2017**

(51) Classification Internationale des Brevets (IPC):
**H02M 7/48** $^{(2007.01)}$    **H02M 1/34** $^{(2007.01)}$

(52) Classification Coopérative des Brevets (CPC):
**H02M 1/34; H02M 1/342; H02M 1/346; H02M 7/48; Y02B 70/10**

(86) Numéro de dépôt international:
**PCT/EP2017/064809**

(87) Numéro de publication internationale:
**WO 2017/220447 (28.12.2017 Gazette 2017/52)**

(54) **SYSTEME ET PROCEDE DE CONVERSION D'UNE PUISSANCE ELECTRIQUE CONTINUE EN PUISSANCE ELECTRIQUE ALTERNATIVE TRIPHASEE AVEC MOYENS DE FILTRAGE**

SYSTEM MIT FILTRIERUNGSMITTELN UND VERFAHREN ZUR UMWANDLUNG VON GLEICHSTROM IN DREIPHASIGEN WECHSELSTROM

SYSTEM AND METHOD FOR CONVERTING DC POWER INTO THREE-PHASE AC POWER, THE SYSTEM COMPRISING FILTERING MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.06.2016 FR 1655813**

(43) Date de publication de la demande:
**01.05.2019 Bulletin 2019/18**

(73) Titulaire: **Mavel EDT S.p.A.**
**11026 Pont-Saint-Martin (AO) (IT)**

(72) Inventeurs:
• **FRANCESSETTI, Marco**
**10071 Borgaro Torinese (IT)**
• **BETTONI, Davide**
**Settimo Vittone TO (IT)**
• **DIB, Wissam**
**92150 Suresnes (FR)**

(74) Mandataire: **Leoncini, Alberto et al**
**A.Bre.Mar. s.r.l.**
**Consulenza in Proprietà Industriale**
**Via Servais, 27**
**10146 Torino (IT)**

(56) Documents cités:
**WO-A1-84/00858    DE-A1- 10 020 137**

• **TAUFIQ J A: "Advanced inverter drives for traction", 19930101, 1 janvier 1993 (1993-01-01), pages 224-228, XP006511671,**
• **XIANGNING HE ET AL: "Bridge leg snubbers for GTO thyristor inverters", INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA, IEEE, US, vol. 2, 8 October 1995 (1995-10-08), pages 1038-1044, XP010193115, DOI: 10.1109/IAS.1995.530416 ISBN: 978-0-7803-3008-5**
• **TAUFIQ J A: "Advanced inverter drives for traction", 19930101, 1 January 1993 (1993-01-01), pages 224-228, XP006511671,**

## Description

La présente invention concerne le domaine des convertisseurs pour la conversion de l'énergie électrique, notamment pour les machines électriques à haute vitesse et/ou à vitesse variable.

Un convertisseur statique est un système permettant de convertir un signal électrique en un autre signal électrique possédant des caractéristiques différentes. Par exemple, un convertisseur peut permettre de convertir une tension alternative en une autre tension alternative avec une fréquence et/ou une amplitude différente, on parle alors de convertisseur alternatif/alternatif ou AC/AC. Selon un autre exemple, un convertisseur peut permettre de convertir une tension alternative en une tension continue, on parle alors de convertisseur alternatif/continu ou AC/DC. Pour la conversion inverse continu/alternatif, on parle de convertisseur DC/AC. Selon un dernier exemple, un convertisseur peut convertir une tension continue en une tension continue de tension différente, on parle alors de convertisseur DC/DC. Les convertisseurs peuvent être réversibles ou non réversibles. Généralement, la conversion est mise en oeuvre au moyen de commutateurs (interrupteurs) commandés.

Pour piloter des machines électriques, notamment des machines électriques à aimants permanents, à partir de système(s) de stockage d'énergie électrique (par exemple une batterie), il est nécessaire de convertir l'énergie électrique continue en énergie alternative triphasée. Cette conversion peut être réalisée au moyen d'un convertisseur DC/AC. Un tel convertisseur doit fournir trois tensions électriques sinusoïdales déphasées de 120° les unes par rapport aux autres, et dont l'amplitude dépend directement du couple demandé (mais aussi du régime de rotation), et dont la fréquence dépend uniquement du régime de rotation de la machine électrique reliée au convertisseur.

Classiquement, un convertisseur DC/AC comprend trois bras de commutations. Chaque bras de commutation comporte deux commutateurs commandés et deux diodes placées en parallèle des commutateurs commandés. En fonction du courant de charge demandé, un bras peut être composé de plusieurs 'sous bras' en parallèle. Les phases de la machine électrique sont reliées au point milieu de chaque bras. On commande chaque bras séparément en pilotant l'ouverture et la fermeture des commutateurs sur des périodes de découpage, de manière à former un signal triphasé.

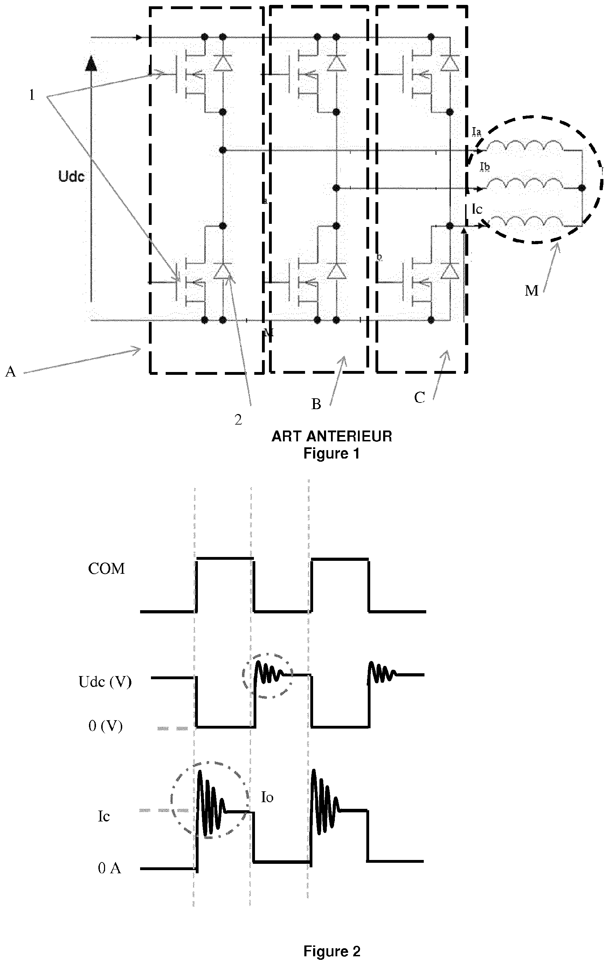

La figure 1 illustre un tel convertisseur classique DC/AC. La tension continue du moyen de stockage d'énergie électrique est indiquée Udc. Le moteur triphasé M est représenté schématiquement par trois bobines, alimentées respectivement par les courants Ia, Ib et Ic. Le convertisseur comporte trois bras de commutation A, B, C, chaque bras de commutation A, B, C est relié à une phase de la machine électrique M. Chaque bras de commutation comporte deux commutateurs 1 et deux diodes 2. Les bras de commutation A, B, C sont disposés en parallèle, entre les deux phases d'entrée continues du convertisseur de tension Udc. Les phases de sortie des bras de commutation A, B, C sont reliées au point milieu (entre les deux commutateurs) des bras de commutation.

La figure 2 représente le signal de commande COM des interrupteurs avec un rapport cyclique constant de 50%, la tension Udc et le courant Ic aux bornes d'un commutateur, pour un convertisseur DC/AC classique (tel que décrit ci-dessus en référence à la figure 1). Pour le signal de commande COM, la partie basse du créneau correspond au commutateur ouvert, et la partie haute du créneau correspond au commutateur fermé. On parle pour ce cas de commutation dite dure ou 'tout ou rien' (de l'anglais « hard switching »). On remarque que pour cette conception du convertisseur, des dépassements de la tension Udc et du courant Io apparaissent. Le courant Io correspond à la valeur permanente de Ic, et correspond au courant envoyé à la machine électrique.

Ainsi, les principaux inconvénients de cette conception classique du convertisseur sont les suivants :

- pertes par commutation : cette conception présente des pertes par commutation importantes, ce qui tend à rendre son utilisation incompatible à des fréquences de commutation élevées, et donc pour des machines électriques utilisées à très hautes vitesses,
- dépassement de courant/tension : comme présenté sur la figure 2, cette stratégie présente des dépassements de tension (de l'anglais « overshoot ») et de courant lors de la commutation instantanée de l'interrupteur. Ainsi, ce type de pilotage nécessite une prise de marge sur la tension et le courant des différents composants lors de la conception du convertisseur (appelé aussi onduleur). Cela implique un surdimensionnement des composants utilisés, (par exemple : pour une tension de bus continu de 300 Volt, on utilise un commutateur IGBT avec une tension nominale de 600 Volt pour prendre en compte ces dépassements de tension et de courant), et
- émissions électromagnétiques importantes (CEM).

En partant des inconvénients de la stratégie « Hard switching » (pertes, incompatibilité avec les moteurs à hautes vitesses), une conception dite commutation douce (ou de l'anglais « Soft switching ») a été développée. Ainsi, pour limiter les dépassements du courant et de la tension sur les commutateurs, une bobine et un condensateur sont ajoutés sur le circuit précédent. La bobine module la variation du courant di/dt (« Turn-On »), et le condensateur module la variation de la tension dv/dt (« Turn-Off »). De plus, et dans le but d'assurer le fonctionnement du circuit, et donc un bilan énergétique nul, une résistance est rajoutée dans le circuit entre la tension de la source d'énergie utilisée et le circuit capacitif. Cette résistance permet d'assurer le fonctionnement de ce circuit et de rebaisser la tension au borne du circuit capacitif. Une telle conception de convertisseur DC/AC est décrite notamment dans la demande de brevet WO 11016854.

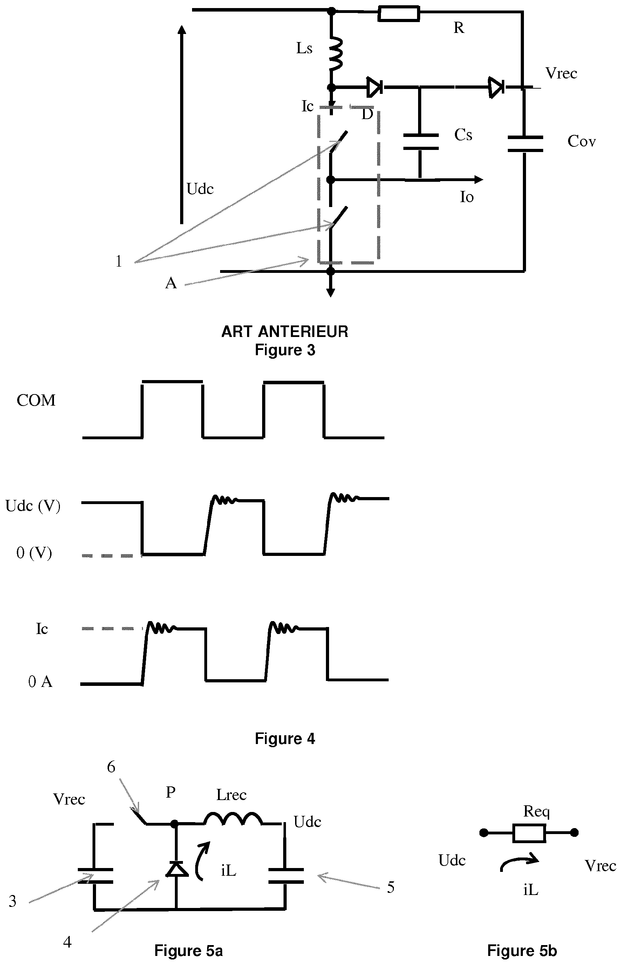

La figure 3 représente un schéma simplifié d'un bras de commutation (avec deux commutateurs 1) avec une capacité Cs, une bobine Ls, une résistance R et une capacité Cov pour une commutation douce. Ce circuit est connu par l'appellation anglaise « Undeland Snubber ». La tension Udc correspond à la tension aux bornes du moyen de stockage de l'énergie électrique continue. La bobine Ls est placée entre une phase d'entrée continue Udc et le bras de commutation A. Une branche part de la jonction entre la bobine Ls et le bras de commutation A, cette branche comporte deux diodes D, et arrive en une jonction entre la résistance R et le condensateur Cov. L'autre extrémité de la résistance R est connectée à la phase d'entrée continue du convertisseur. L'autre extrémité du condensateur Cs est connectée à la phase de sortie alternative du bras de commutation A. L'autre extrémité de la capacité Cov est connectée à la masse. La capacité Cs permet de moduler l'évolution de la tension aux bornes du commutateur. Cette capacité stocke une part de l'énergie due à la commutation douce des interrupteurs. L'autre partie de cette énergie est stockée dans une capacité d'une valeur plus élevée Cov. Ensuite, l'énergie stockée dans la capacité est renvoyée au système de stockage utilisé (batterie) à travers la résistance. La bobine Ls permet de moduler l'évolution du courant aux bornes du commutateur. En fait, l'énergie créée par la bobine Ls n'est pas en entièrement stockée dans la capacité Cs, d'où la nécessité d'une deuxième capacité Cov d'une valeur plus élevée que Cs. La résistance assure le fonctionnement du système et permet de rebaisser la tension Vrec.

La figure 4 présente, de manière similaire à la figure 2, le signal de commutation COM, l'évolution de la tension Udc et du courant le du commutateur lors d'une commutation dite « soft ». Pour le signal de commande COM, la partie basse du créneau correspond au commutateur ouvert, et la partie haute du créneau correspond au commutateur fermé. On remarque sur cette figure, que les dépassements de tension Udc et de courant le sont diminués par rapport à la commutation dite « hard ».

Les avantages de la commutation douce sont :

- moins de pertes par commutation, cette conception du convertisseur est compatible avec des fréquences de commutation élevées, ainsi, cette conception peut être utilisée pour piloter des machines électriques à hautes vitesses,
- peu de dépassement de tension et du courant sur le commutateur, donc plus besoin de surdimensionner les composants, et
- l'évolution de la tension et du courant aux bornes des commutateurs lors de la transition est modulée par le choix de Ls et Cs respectivement.

Cette conception du convertisseur nécessite un agencement particulier des différents composants électriques, ce qui rend leur montage long et complexe. Par ailleurs, cette conception du convertisseur présente un inconvénient majeur, qui est la nécessité de dissiper une énergie dans la résistance, dont l'objectif est de rendre le bilan énergétique des éléments passifs nul, et donc de rebaisser la tension Vrec, ce qui implique des pertes énergétiques, et par conséquent une diminution de l'efficacité du convertisseur.

En outre, une autre contrainte de conception du convertisseur est son encombrement qui doit être limité.

Afin de pallier à ces inconvénients, la présente invention concerne un système de conversion d'une puissance électrique continue en puissance électrique triphasée comprenant trois bras de commutation, un circuit de modulation, un module récupérateur d'énergie électrique et des moyens de filtrage. Les moyens de filtrage comprennent un condensateur et un ensemble formé d'une bobine de filtrage en série avec une diode. L'association de la diode avec la bobine permet de choisir une bobine de plus faible inductance, donc ayant un encombrement réduit. De plus, au moyen du circuit de modulation, une commutation douce est mise en oeuvre, ce qui diminue notamment les pertes par commutations, et les dépassements de tension et de courant sur les commutateurs. En outre, le module récupérateur d'énergie électrique permet d'optimiser l'efficacité du convertisseur.

Le système selon l'invention

L'invention concerne un système de conversion d'une puissance électrique continue en puissance électrique triphasée selon la revendication 1

En outre, l'invention concerne un système moteur comprenant au moins un moyen de stockage d'énergie électrique et une machine électrique triphasée. Le système moteur comporte un système de conversion selon l'une des revendications, pour convertir l'énergie électrique continue dudit moyen de stockage de l'énergie électrique en énergie électrique alternative triphasée pour ladite machine électrique.

**Présentation succincte des figures**

D'autres caractéristiques et avantages du système selon l'invention, apparaîtront à la lecture de la description ci-après d'exemples non limitatifs de réalisations, en se référant aux figures annexées et décrites ci-après.

D'autres caractéristiques et avantages du système selon l'invention, apparaîtront à la lecture de la description ci-après d'exemples non limitatifs de réalisations, en se référant aux figures annexées et décrites ci-après.

La figure 1, déjà décrite, illustre un convertisseur DC/AC classique, avec commutation dure, selon l'art antérieur.
La figure 2, déjà décrite, illustre le signal de commutation, la tension et l'intensité dans une phase pour un convertisseur DC/AC selon la conception de la figure 1.

La figure 3, déjà décrite, illustre un convertisseur DC/AC selon l'art antérieur, avec commutation douce.

La figure 4, déjà décrite, illustre le signal de commutation, la tension et l'intensité dans une phase pour un convertisseur DC/AC selon la conception de la figure 3.

La figure 5a illustre un exemple de réalisation du module récupérateur d'énergie électrique pour un convertisseur selon un mode de réalisation de l'invention.

La figure 5b illustre un modèle équivalent résistif au module récupérateur d'énergie électrique de la figure 5a.

La figure 6 illustre un circuit électrique d'une phase du système de conversion selon l'invention.

La figure 7 illustre de manière schématique un module de filtrage selon l'invention.

## Description détaillée de l'invention

La présente invention concerne un système de conversion (convertisseur) DC/AC permettant de convertir une énergie électrique continue en énergie électrique alternative triphasée. Avantageusement, le système de conversion selon l'invention, peut être bidirectionnel (réversible). Ainsi, au moyen du système de conversion selon l'invention, une énergie alternative triphasée peut être convertie en énergie électrique continue.

Classiquement, le système de conversion selon l'invention, comporte trois bras de commutation, une phase d'entrée continue, et trois phases de sorties alternatives. La conception des trois bras de commutation peut être similaire à celle des convertisseurs DC/AC selon l'art antérieur, par exemple cette conception peut être conforme à la conception de la figure 1. Ainsi, chaque bras de convertisseur peut comprendre deux commutateurs (interrupteurs) commandés et deux diodes. Les diodes sont placées en parallèle des commutateurs, et permettent le passage du courant dans un seul sens. De manière connue, la commande des commutateurs permet de générer une tension alternative. Les phases de sortie alternatives du système de conversion sont reliées au point milieu de chaque bras de commutation, c'est-à-dire entre les deux commutateurs.

Conformément à une caractéristique de l'invention, les commutateurs peuvent être des commutateurs de type MOSFET (acronyme anglais de « Metal Oxide Semiconductor Field Effect Transistor » qui se traduit par transistor à effet de champ à structure métal-oxyde-semiconducteur) et/ou IGBT (transistor bipolaire à grille isolée de l'anglais « Insulated Gate Bipolar Transistor »).

De préférence, les commutateurs sont commandés par une méthode de modulation de largeur d'impulsion (MLI ou en anglais PWM pour « Pulse Width Modulation »). Le principe général de cette méthode de modulation est qu'en appliquant une succession d'états discrets pendant des durées bien choisies, on peut obtenir en moyenne sur une certaine durée n'importe quelle valeur intermédiaire.

Les différents modes de réalisation décrits ci-dessous peuvent être combinés de manière à combiner leurs effets et leurs avantages.

Selon l'invention, le système de conversion comporte en outre un circuit de modulation de tension et d'intensité. Le circuit de modulation de tension et d'intensité permet une commutation douce (« soft switching »), ce qui permet de limiter les pertes par commutation, de limiter les dépassements de tension et de courant sur les commutateurs. Le circuit de modulation comporte une bobine, qui module la variation de courant, et un condensateur par phase, pour moduler la variation de tension.

Selon l'invention, le circuit de modulation comporte une bobine de modulation qui relie une phase d'entrée continue du système de commutation et les bras de commutation. De plus, le circuit de commutation comporte un condensateur de modulation par phase (donc trois condensateurs, un pour chacun des trois bras de commutation) qui relie la phase de sortie alternative et la jonction entre la bobine du circuit de modulation et les bras de modulation. La bobine module la variation du courant di/dt (« Turn-On »), et le condensateur module la variation de la tension dv/dt (« Turn-Off »). Selon un exemple de réalisation, la conception du circuit de modulation du système convertisseur selon l'invention peut correspondre à la conception de la commutation douce illustrée en figure 3 sans la résistance R. De plus, pour réaliser les trois bras du système de conversion, ce schéma peut être répété trois fois (une fois pour chaque bras de commutation). En outre, les connexions vers le système de stockage d'énergie et vers la machine électrique peuvent être similaires aux connexions du convertisseur classique illustré à la figure 1.

Selon l'invention, le système de conversion comporte en outre un module récupérateur d'énergie électrique. Ainsi, le système de conversion ne comporte pas de résistance, dans laquelle de l'énergie est dissipée pour l'art antérieur. Au contraire, le module récupérateur d'énergie électrique, qui remplace la résistance, permet de récupérer l'énergie disponible ou créée lors de la commutation dite douce, en récupérant l'énergie disponible lors de la commutation douce, et en l'envoyant vers des moyens de stockage d'énergie électrique (par exemple une batterie), connectés aux phases continues du système de conversion. Ainsi, les pertes électriques sont fortement réduites. Le module récupérateur d'énergie électrique est relié au bras de commutation et au circuit de modulation.

Selon l'invention, le système de conversion comporte en outre des moyens de filtrage. Les moyens de filtrage permettent de lisser les tensions et les courants dans les phases de sortie alternative. De manière connue, les moyens de filtrage comportent, pour chaque phase de sortie du convertisseur, une bobine de filtrage et un condensateur de filtrage. En outre, les moyens de filtrage comportent une diode associée en série à la bobine de filtrage. De cette manière, il est possible de réduire l'inductance de la bobine des moyens de filtrage, ce qui a pour effet de réduire l'encombrement du système de conversion. En effet, sans la diode, et pour garantir un filtrage optimal, il est nécessaire d'avoir une bobine de filtrage de plusieurs centaines de micro henry, qui peuvent représenter un encombrement d'environ 10 cm sur 5 cm, alors qu'avec la diode (selon l'invention), la bobine de filtrage peut avoir une valeur comprise entre 0,5 et 50 micro henry, qui peuvent représenter un encombrement d'environ 1 cm sur 1 cm. Un autre effet de cette réduction de l'inductance de la bobine est la diminution de la chaleur générée, ce qui permet de simplifier le refroidissement du système de conversion.

Conformément à une mise en oeuvre de l'invention, chaque moyen de filtrage est disposé entre un bras de commutation et le module récupérateur d'énergie électrique du système de conversion.

De préférence, la diode en série avec la bobine de filtrage au sein des moyens de filtrage est une diode du type Schottky (qui est une diode qui a un seuil de tension directe très bas et un temps de commutation très court). La diode est placée de manière à permettre le passage du courant depuis le bras de commutation vers le module récupérateur d'énergie électrique. La diode permet de réduire voire d'éliminer les pics de tension aux bornes du module récupérateur d'énergie électrique. De préférence, la diode est placée en amont de la bobine de filtrage dans le sens de circulation du courant.

Selon un mode de réalisation de l'invention, l'ensemble formé par la bobine et la diode des moyens de filtrage est monté sur un module de filtrage indépendant. On appelle module, un élément indépendant sous forme de bloc, qui regroupe tous les composants électroniques qui assurent une fonction. Cette réalisation sous forme de module, permet un assemblage simplifié et une modularité du système de conversion. De préférence, le module de filtrage peut être monté sur une carte de circuit imprimé, qui comporte les bras de commutation, le circuit de modulation et le module récupérateur d'énergie électrique. Avantageusement, les bras de commutation peuvent être également réalisés sous forme de modules, dits modules de puissances. Ainsi, le système de conversion peut être réalisé par assemblage sur une carte de circuit imprimé, de modules de filtrage (un par phase de sortie), de modules de puissance (au moins un par phase de sortie), et d'un module récupérateur d'énergie électrique. Ainsi, les blocs peuvent être fabriqués séparément, et de manière standard, et le système de conversion est composé de différents modules (blocs) assemblés sur une carte de circuit imprimé. Ainsi, il n'est pas nécessaire d'assembler tous les composants électroniques du système de conversion sur un seul élément. De plus, cette réalisation sous forme de modules, permet de faciliter la maintenance : il est possible de remplacer uniquement un module défectueux sans à avoir à remplacer l'ensemble du convertisseur. Un autre avantage de cette conception est la possibilité d'utiliser des modules standards, qui peuvent être choisis en fonction de l'application souhaitée.

Le module récupérateur d'énergie électrique comprende au moins une inductance, au moins une diode, au moins un condensateur et au moins un commutateur. Le commutateur est commandé de manière à autoriser la récupération d'énergie et son transfert vers les moyens de stockage d'énergie électrique.

Selon l'invention, le module récupérateur d'énergie électrique comporte trois branches reliées en un point de jonction avec :

- une première branche comportant un commutateur,
- une deuxième branche comportant une diode, et
- une troisième branche comportant une inductance.

Ainsi, la carte du circuit imprimé du système de conversion peut être modifiée de manière spécifique pour utiliser la conception d'un convertisseur de commutation souple compatible avec des fréquences de commutation élevées, tout en minimisant les pertes dues au circuit passif rajouté pour assurer le fonctionnement du circuit de modulation.

La figure 5a représente, de manière schématique et non limitative, un tel module récupérateur d'énergie électrique. Le module récupérateur d'énergie électrique comporte trois branches reliées en un point de jonction P, avec :

- une première branche avec un commutateur 6,
- une deuxième branche comportant une diode 4 (dans laquelle circule un courant iL en fonction de la tension à ses bornes), et
- une troisième branche comportant une inductance Lrec.

Sur la figure 5a, le condensateur 5 représente la capacité des moyens de stockage d'énergie électrique (batterie) et n'est pas un composant du module récupérateur. Le condensateur 5 est placé entre l'inductance Lrec et la masse.

De plus, le condensateur 3 représente la capacité Crec, et c'est un composant du module récupérateur. Le condensateur 3 est placé entre le commutateur et la masse.

La diode 4 est placée entre le point de jonction des trois branches et la masse.

En pilotant le commutateur (son rapport cyclique), on peut piloter le courant iL qui circule entre Vrec et Udc (le courant envoyé à la batterie).

Ainsi en considérant l'ensemble formé par le module récupérateur et le condensateur des moyens de stockage d'énergie électrique, l'ensemble est formé de trois branches parallèles, placées entre le point P et la masse, avec :

- une première branche comportant le commutateur 6 et le condensateur 3,
- une deuxième branche comportant une diode 4, et
- une troisième branche comportant l'inductance Lrec et la capacité 5 des moyens de stockage de l'énergie électrique.

Quand le commutateur est fermé, la diode est dans un mode bloquée et le courant iL qui circule dans la bobine Lrec (représenté dans la figure 5a) est égal à

$$\frac{V_{rec} - U_{dc}}{L_{rec}}$$

Quand le commutateur est ouvert, la diode est un mode passant est le courant iL qui circule dans la bobine Lrec (représenté dans la figure 5a) est égal à

$$\frac{-U_{dc}}{L_{rec}}.$$

Ainsi en pilotant le temps d'ouverture et de fermeture du commutateur on peut piloter la valeur moyenne du courant iL, et avoir un fonctionnement équivalent d'un circuit résistif.

La figure 5b représente, de manière non limitative, un schéma électrique équivalent du module récupérateur d'énergie électrique illustré à la figure 5a. Ainsi, le module récupérateur d'énergie électrique est équivalent à une résistance équivalente Req, dans laquelle circule un courant iL, mais sans dissipation de l'énergie électrique.

Pour cette variante de réalisation, le courant moyen 1 dans ce circuit de récupération d'énergie électrique peut être exprimé sous la forme suivante :

$$\bar{i} \cong \frac{V_{rec} - U_{dc}}{L_{rec}} \frac{T}{2} = \frac{V_{rec} - U_{dc}}{2 * L_{rec} * Fsw} \cong \frac{V_{rec} - U_{dc}}{Req}$$

avec :

- T la période de commutation du commutateur,
- Vrec la tension de récupération,
- Udc la tension de la phase d'entrée continue,
- Lrec l'inductance du module récupérateur,
- Req la résistance équivalente, et
- Fsw représente la fréquence de commutation des interrupteurs.

De préférence, un tel module récupérateur d'énergie est monté dans le système de conversion équipé du circuit de modulation, de telle sorte que le module récupérateur d'énergie électrique est disposé entre une phase d'entrée continue du système de conversion et la jonction entre le bras de commutation et le condensateur du circuit de modulation. Pour le mode de réalisation de la figure 5a, le module récupérateur d'énergie électrique peut être connecté de telle sorte que :

- le point du module récupérateur relié à ladite phase d'entrée continue (de tension Udc) du système de conversion correspond au point de la troisième branche du module récupérateur entre l'inductance Lrec et le deuxième condensateur 5 (ce condensateur est la capacité de la batterie), et
- le point du module récupérateur relié à la jonction entre le bras de commutation (de tension Vrec) et le condensateur du circuit de modulation correspond au point de la première branche du module récupérateur entre le commutateur 6 et le premier condensateur 3.

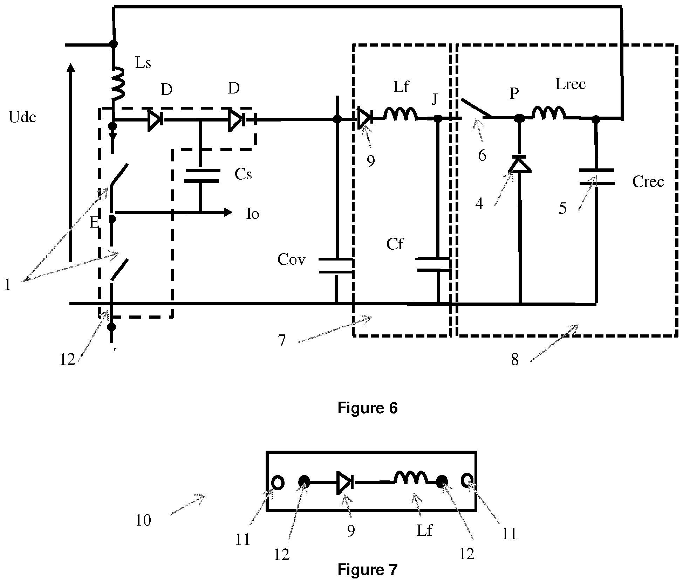

La figure 6 illustre, de manière schématique et non limitative, un circuit électrique d'un système de conversion selon l'invention (avec une diode en série de la bobine de filtrage). Pour faciliter la compréhension de la figure, celle-ci ne représente le circuit avec un seul bras de commutation pour une seule phase de sortie triphasée du système de conversion, ce circuit est répété pour les deux autres phases. Le système de conversion comporte :

- une phase d'entrée continue alimentée par une tension Udc, par rapport à la masse,
- une bobine de modulation Ls, dont une première extrémité est connectée à la phase d'entrée continue,
- un bras de commutation 12, connectée à une deuxième extrémité de la bobine de modulation Ls, le bras de commutation 12 comporte :

  ○ deux commutateurs 1 en série sur une branche, cette branche est connectée d'une part à la deuxième extrémité de la bobine de modulation Ls et d'autre part à la masse,
  ○ deux diodes D en série sur une branche, qui est connectée au point de jonction entre la deuxième extrémité de la bobine de modulation Ls, et la branche comprenant les deux commutateurs 1,
  ○ une sortie alternative E de courant Io, qui est située au point milieu entre les deux commutateurs 1,

- une capacité Cs de modulation, dont une extrémité est connectée à un point de jonction entre les deux diodes D du bras de commutation 12, et dont l'autre extrémité est connectée à la sortie E du bras de commutation 12,
- une capacité Cov qui permet de stocker une partie de l'énergie électrique, la capacité Cov est disposée entre l'extrémité (non reliée à la bobine de modulation Ls) de la branche du bras de commutation 12 qui comprend les deux diodes D et la masse,
- des moyens de filtrage 7, en parallèle de la capacité Cov, c'est-à-dire également connectés entre l'extrémité de la branche du bras de commutation 12 qui comprend les deux diodes D et la masse, les moyens de filtrage comprennent :

   ◦ un ensemble formé d'une diode 9 en série avec une bobine de filtrage Lf, servant au filtrage, cet ensemble est connecté entre l'extrémité de la branche du bras de commutation 12 qui comprend les deux diodes D et un point de jonction J à l'extrémité de la bobine de filtrage Lf,
   ◦ une capacité de filtrage Cf, connectée entre ce point de jonction J et la masse,

- un module récupérateur d'énergie électrique 8, identique à celui illustré à la figure 5a, et qui comporte trois branches reliées en un point de jonction P, avec :

   ◦ une première branche avec un commutateur 6, l'extrémité de la première branche est connectée au point de jonction J des moyens de filtrage 7,
   ◦ une deuxième branche comportant une diode 4, l'extrémité de la deuxième branche est connectée à la masse, et
   ◦ une troisième branche comportant une inductance Lrec, l'extrémité de la troisième branche est connectée à la phase d'entrée continue du système de conversion, et

- une capacité 5, notée Crec, connectée entre l'extrémité de la troisième branche du module récupérateur 8 d'énergie électrique (c'est-à-dire connectée à la bobine Lrec) et la masse.

Pour le mode de réalisation illustré en figure 6, on peut utiliser, de manière illustrative et non limitative, des composants ayant les valeurs suivantes :

- Ls ~= 300 MicroHenry,
- Cs ~= 6.8 nF,
- Cov ~= 2820 nF (6*470 nF : formé de six capacités en parallèle)),
- Vrec ~= 1.15 Vbus,
- Lrec = 21 microH,
- Crec = 27.2 nF (6.8 nF x4 : formé de quatre capacités en parallèle),
- Lf = 2.2 microH,
- Cf =10$\mu$F + 470nF = 10.47 $\mu$F, et
- type de commutateur : IGBT.

La figure 7 illustre de manière schématique et non limitative, un module de filtrage selon un mode de réalisation de l'invention. Le module de filtrage 10 comporte une diode 9 en série avec une bobine Lf. Aux extrémités de la diode 9 et de la bobine Lf, le module de filtrage comporte des moyens de connexion électrique 12 pour permettre une connexion électrique avec les autres éléments du convertisseur. De plus, le module de filtrage comporte des orifices 11 pour le montage sur une carte de circuit imprimé. Le montage peut être réalisé par vissage, encliquetage (« clipsage »), soudure, ou tout moyen analogue.

Selon une variante de réalisation de l'invention, le système de conversion peut comporter au moins deux sondes de courant pour mesurer le courant dans deux phases.

Selon une variante de réalisation de l'invention, le système de conversion peut comporter au moins deux sondes de tension isolées pour mesurer les tensions composées entre les phases.

Ces capteurs de courants et de tensions peuvent servir pour le pilotage des bras de commutation.

Le système de conversion selon l'invention permet de piloter des machines électriques, pour tous types d'application, en particulier pour des machines électriques tournant à de très hautes vitesses avec un rendement de l'onduleur (convertisseur) élevé.

Le convertisseur selon l'invention peut être prévu pour une utilisation embarquée, en particulier au sein d'un véhicule, notamment terrestre, aéronautique ou naval.

Le système de conversion selon l'invention peut également être utilisé dans les systèmes non embarqués de production d'énergie électrique, tels que des turbines, des micro-turbines ou des éoliennes.

En outre, la présente invention concerne un système moteur comprenant au moins un moyen de stockage d'énergie électrique, par exemple une batterie, et une machine électrique triphasée, par exemple une machine électrique à aimants permanents. Le système moteur comporte un système de conversion selon le modes de réalisation décrits ci-dessus, pour convertir l'énergie électrique continue dudit moyen de stockage de l'énergie électrique en énergie électrique alternative triphasée pour ladite machine électrique, et éventuellement inversement. Ainsi, grâce au système de conversion, la machine électrique peut être pilotée, tout en limitant les pertes électriques. En outre, si le système de conversion est bidirectionnel (réversible), alors il est également possible de stocker (par exemple dans une batterie) une énergie électrique engendrée par la rotation de la machine électrique.

**Revendications**

1.   Système de conversion d'une puissance électrique continue en puissance électrique alternative triphasée,

   comprenant trois bras de commutation (A, B, C), un circuit de modulation des variations de tension et d'intensité comprenant
   un premier condensateur (Cs) par phase de sortie alternative dudit système de conversion le système de conversion
   comportant en outre une première bobine (Ls) étant disposée entre une entrée continue dudit système de conversion et un premier point de jonction desdits bras de commutation, chaque bras de commutation comportant,

- un premier et un deuxième commutateur (1) en série formant une première branche,

cette première branche étant connectée d'une part au premier point de jonction desdits bras de commutation et d'autre part à la masse, les phases de sortie alternatives du système de conversion étant respectivement reliées à un deuxième point de jonction (E) du premier et du deuxième commutateur (1), chaque bras de commutation comportant en outre:

- une première et une deuxième diode (D) en série formant une deuxième branche,
- une première extrémité de la deuxième branche étant connectée au premier point de jonction desdits bras de commutation,
- une sortie (E) de courant (Io) correspondant au deuxième point de jonction (E) entre le premier et le deuxième commutateur (1),

le premier condensateur (Cs) étant connectée à un deuxième point de jonction entre les deux diodes (D) de la deuxième branche, et étant connectée à la sortie (E) de courant (Io) du bras de commutation, chaque bras de commutation comportant en outre:

- un deuxième condensateur (Cov) disposé entre une deuxième extrémité de la deuxième branche et la masse,

ledit système de conversion comprenant, pour chaque phase de sortie alternative dudit système de conversion, des moyens de filtrage (7) comportant un troisième condensateur (Cf) et une troisième branche formée d'une deuxième bobine (Lf) montée en série avec une troisième diode (9), la troisième diode (9) étant reliée à la deuxième extrémité de la deuxième branche et au deuxième condensateur (Cov), le système de conversion comportant en outre un module récupérateur d'énergie électrique, ledit module récupérateur d'énergie électrique comportant un troisième commutateur (6), une troisième bobine (Lrec) et une quatrième diode (4) dont les premières extrémités étant reliées en un troisième point de jonction (P), ledit module récupérateur d'énergie électrique comportant en outre un quatrième condensateur (Crec), une deuxième extrémité de la quatrième diode (4) étant connectée à la masse, une deuxième extrémité de la troisième bobine (Lrec) étant connectée à l'entrée continue du système de conversion, le quatrième condensateur (Crec) étant connectée entre la deuxième extrémité de la troisième bobine (Lrec) et à la masse, une deuxième extrémité du troisième commutateur (6), une deuxième extrémité de la deuxième bobine (Lf) et une première extrémité du troisième condensateur (Cf) étant reliés en un quatrième point de jonction (J), une deuxième extrémité du troisième condensateur (Cf) étant connectée à la masse, le système de conversion étant configuré pour recevoir une tension continue entre l'entrée continue du système de conversion et la masse.

2. Système selon la revendication 1, dans lequel ladite deuxième bobine (Lf) a une inductance comprise entre 0,5 et 50 microH.

3. Système selon l'une des revendications précédentes, dans lequel ladite troisième diode (9) desdits moyens de filtrage est du type Schottky.

4. Système selon la revendication 3, dans lequel chaque module de filtrage (10) est monté sur une carte de circuit imprimé, qui comporte lesdits bras de commutation (A, B, C), ledit circuit de modulation et ledit module récupérateur (8) d'énergie électrique.

5. Système selon l'une des revendications précédentes, dans lequel ledit système de conversion est bidirectionnel.

6. Système moteur comprenant au moins un moyen de stockage d'énergie électrique et une machine électrique triphasée (M), **caractérisé en ce que** le système moteur comporte un système de conversion selon l'une des revendications précédentes, pour convertir l'énergie électrique continue dudit moyen de stockage de l'énergie électrique en énergie électrique alternative triphasée pour ladite machine électrique.

**Patentansprüche**

1. System zur Umwandlung elektrischer Dauerleistung in dreiphasige elektrische Wechselleistung,

bestehend aus drei Schaltzweigen (A, B, C), eine Schaltung zum Modulieren von Spannungs- und Intensitätsschwankungen, umfassend einen ersten Kondensator (Cs) für die alternierende Ausgangsphase des Umwandlungssystems

wobei das Umwandlungssystem weiterhin eine erste Spule (Ls) umfasst, die an einem Gleichstromeingang des Umwandlungssystems und einem ersten Verbindungspunkt des Schaltzweigs angeordnet ist,

jeder Vermittlungszweig einschließlich,

- ein erster und ein zweiter Schalter (1), die in Reihe geschaltet sind und einen ersten Zweig bilden,

wobei dieser erste Zweig auf einer Seite mit dem ersten Verbindungspunkt des Schaltzweigs und auf der anderen Seite mit Erde verbunden ist, wobei die alternierenden Ausgangsphasen des Umwandlungssystems jeweils mit einem zweiten Verbindungspunkt (E) des ersten und zweiten Schalters (1) verbunden sind,

Jeder Vermittlungszweig umfasst außerdem:

- eine erste und eine zweite Diode (D), die in Reihe geschaltet sind und einen zweiten Zweig bilden,
- ein erstes Ende des zweiten Zweigs, das mit dem ersten Verbindungspunkt des Schaltzweigs verbunden ist,
- einen ausgang (E) von Strom (Io), der dem zweiten Verbindungspunkt (E) zwischen dem ersten und zweiten Schalter (1) entspricht,

wobei der erste Kondensator (Cs) mit einem zweiten Verbindungspunkt (E) zwischen den beiden Dioden (D) des zweiten Zweigs verbunden ist,

und mit dem ausgang (E) von Strom (Io) des Schaltzweigs verbunden ist,

Jeder Vermittlungszweig umfasst außerdem:

- einen zweiten Kondensator (Cov), der zwischen einem zweiten Ende des zweiten Zweigs und der Erde angeordnet ist,

wobei das Umwandlungssystem für jede alternative Ausgangsphase des Umwandlungssystems Filtermittel (7) umfasst, die einen dritten Kondensator (Cf) und einen dritten Zweig umfassen, der durch eine zweite Spule (Lf) gebildet wird, die in Reihe mit einer dritten Diode (9) geschaltet ist,

wobei die dritte Diode (9) mit dem zweiten Ende des zweiten Zweigs und mit dem zweiten Kondensator (Cov) verbunden ist,

das Umwandlungssystem umfasst auch ein Modul zur Rückgewinnung elektrischer Energie, wobei das Modul zur Rückgewinnung elektrischer Energie einen dritten Schalter (6), eine dritte Spule (Lrec) und eine vierte Diode (4) umfasst, deren erste Enden mit einem dritten Verbindungspunkt (P) verbunden sind,

wobei das Modul zur Rückgewinnung elektrischer Energie weiterhin einen vierten Kondensator (Crec) umfasst, wobei ein zweites Ende der vierten Diode (4) mit Masse verbunden ist und ein zweites Ende der dritten Spule (Lrec) mit dem Gleichstromeingang des Umwandlungssystems verbunden ist.

wobei der vierte Kondensator (Crec) zwischen dem zweiten Ende der dritten Spule (Lrec) und Masse angeschlossen ist,

ein zweites Ende des dritten Schalters (6), ein zweites Ende der zweiten Spule (Lf) und ein erstes Ende des dritten Kondensators (Cf) mit einem vierten Verbindungspunkt (J) verbunden sind,

ein zweites Ende des dritten Kondensators (Cf) mit Masse verbunden ist,

wobei das Umwandlungssystem so konfiguriert ist, dass es eine Gleichspannung zwischen dem Gleichstromeingang des Umwandlungssystems und Erde empfängt.

2. System nach Anspruch 1, wobei die zweite Spule (Lf) eine Induktivität zwischen 0,5 und 50 μH aufweist.

3. System nach einem der vorhergehenden Ansprüche, wobei die dritte Diode (9) des Filtermittels vom Schottky-Typ ist.

4. System nach Anspruch 3, wobei jedes Filtermodul (10) auf einer Leiterplatte montiert ist, die die Schaltzweige (A, B, C), die Modulationsschaltung und das Energierückgewinnungsmodul (8) enthält.

5. System nach einem der vorhergehenden Ansprüche, wobei das Konvertierungssystem bidirektional ist.

6. Motorsystem umfassend mindestens einen elektrischen Energiespeicher und eine dreiphasige elektrische Maschine (M), **dadurch gekennzeichnet, dass** das Motorsystem ein Umwandlungssystem nach einem der vorherigen Ansprüche zum Umwandeln der kontinuierlichen elektrischen Energie des besagten Mittels umfasst der elektrischen Energiespeicherung in dreiphasiger elektrischer Wechselenergie für die elektrische Maschine.

**Claims**

1. System for converting continuous electrical power into three-phase alternating electrical power,

comprising three switching branches (A, B, C), a circuit for modulating voltage and intensity variations comprising
a first capacitor (Cs) for the alternating output phase of said conversion system
the conversion system further comprising a first coil (Ls) which is arranged at a DC input of said conversion system and a first junction point of said switching branch,
each switching branch including,

- a first and a second switch (1) in series forming a first branch,

this first branch being connected on one side to the first junction point of said switching branch and on the other side to ground,
the alternating output phases of the conversion system being respectively connected to a second junction point (E) of the first and second switches (1),
each switching branch also including:

- a first and a second diode (D) in series forming a second branch,
- a first end of the second branch which is connected to the first junction point of said switching branch,
- an output (E) of current (Io) corresponding to the second junction point (E) between the first and second switch (1),

the first capacitor (Cs) being connected to a second junction point (E) between the two diodes (D) of the second branch,
and being connected to the output (E) of current (Io) of the switching branch,
each switching branch also including:

- a second capacitor (Cov) arranged between a second end of the second branch and the ground,

said conversion system comprising, for each alternate output phase of said conversion system, filtering means (7) comprising a third capacitor (Cf) and a third branch formed by a second coil (Lf) mounted in series with a third diode (9),
the third diode (9) being connected to the second end of the second branch and to the second capacitor (Cov),
the conversion system also including an electrical energy recovery module,
said electrical energy recovery module comprising a third switch (6), a third coil (Lrec) and a fourth diode (4) whose first ends are connected to a third junction point (P),
said electrical energy recovery module further comprising a fourth capacitor (Crec), a second end of the fourth diode (4) being connected to ground, a second end of the third coil (Lrec) being connected to the DC input of the conversion system,
the fourth capacitor (Crec) being connected between the second end of the third coil (Lrec) and ground,
a second end of the third switch (6), a second end of the second coil (Lf) and a first end of the third capacitor (Cf) being connected to a fourth junction point (J),
a second end of the third capacitor (Cf) being connected to ground,
the conversion system being configured to receive a DC voltage between the DC input of the conversion system and ground.

2. System according to claim 1, wherein said second coil (Lf) has an inductance between 0.5 and 50 microH.

3. System according to one of the previous claims, wherein said third diode (9) of said filtering means is of the Schottky type.

4. System according to claim 3, wherein each filter module (10) is mounted on a printed circuit board, which includes said switching branches (A, B, C), said modulation circuit and said energy recovery module electricity (8).

5. System according to one of the previous claims, wherein said conversion system is bidirectional.

6. Engine system comprising at least one electric energy storage means and a three-phase electric machine (M), **characterized in that** the engine system includes a conversion system according to one of the previous claims, for converting the continuous electrical energy of said means of electrical energy storage in three-phase alternating electrical energy for said electric machine.

ART ANTERIEUR
Figure 1

Figure 2

ART ANTERIEUR
Figure 3

Figure 4

Figure 5a

Figure 5b

**Figure 6**

**Figure 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 11016854 A